# EUROPEAN PATENT APPLICATION

(11) **EP 2 337 299 A1**
(43) Date of publication of application: **22.06.2011**
(21) Application number: 09306272.7
(22) Date of filing: 18.12.2009
(51) Int. Cl.: H04L 29/06, G06F 21/00, H04L 9/32

(54) **A method, a first user equipment, a second user equipment, a computer program and a computer program product**

(71) Applicant: Alcatel Lucent, 75008 Paris (FR)
(72) Inventor: Nogueira, georges, 67300 Schiltigheim (FR); Kreet Olivier, 67100 Strasbourg (FR)
(74) Representative: Urlichs, Stefan

(57) **Abstract**

The invention concerns a method for storing (503) a piece of information, in particular a first certificate, wherein storing (503) of said piece of information on a first user equipment is permitted (502) if a first signature, in particular a digital signature produced depending on said piece of information, is successfully validated (500, 501) as authentic signature of a second user equipment, or storing of said piece of information is prevented (502) otherwise.

## Description

### Field of the invention

The invention relates to a method, a first user equipment, a second user equipment, a computer program and a computer program product.

### Background

Common implementations for storing information on user equipments make use of a trusted environment, e.g, a chain of trust within a public key infrastructure using digital certificates and public / private key pairs. When connecting user equipments to a server, typically secure connections using encryption certifieates are preferred. Therefore public server certificates need to be installed on all user equipments. This task is for example performed manually by an administrator for each user equipment at the time of connecting said user equipment to said server.

Manually installing said public server certificates in all user equipment is cumbersome and time consuming.

### Summary

Object of the invention is therefore, to provide a simple, more efficient and less time consuming method for installing public server certificates in a first user equipments that shall be connected to a server using an encrypted connection.

The public server be installed by an administrator in a second user equipment in a first step. Then in a second step the digital signature of the public server certificate is produced by the second user equipment. Afterwards the first user equipment receives the digital signature and the public server certificate, Then the first user equipment installs the public server certificate if the signature has been validated successfully.

The main idea of the invention is to permit storing of a piece of information on a first user equipment if a first signature, in particular a digital signature produced depending on said piece of information, is successfully validated as authentic signature of a second user equipment, or to prevent storing of said piece of information otherwise. This way the public server certificate is installed automatically on a first, user equipment if it's authenticity is proven.

Advantageously a message comprising said piece of information, said first signature, and a second certificate is received, a third certificate is read at least partially from a first storage, and said first signature is validated depending on said second certificate and said third certificate.

Advantageously said first signature is associated with a second certificate and said first signature is validated using said second certificate.

Advantageously said first signature and a device certificate of said first user equipment are linked by at least one chain of trust, in particular to a common root in particular being issued by a common root certificate authority.

Further development 8 of the invention can be gathered from dependent claims and the following description.

### Brief description of the figures

In the following the invention will be explained further, making reference to the attached drawings.
Fig. 1 schematically shows a data structure of a message.
Fig. 2 schematically shows a first user equipment according to the invention.
Fig. 3 schematically shows a second user equipment according to the invention.
Fig. 4 schematically shows a flowchart of a first method according to the invention.
Fig. 5 shows a second flowchart of a second method according to the invention.

### Description of the embodiments

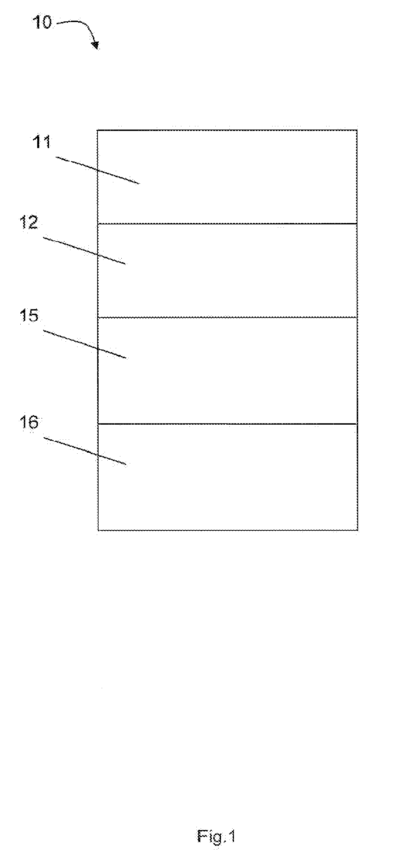

Fig. 1 schematically shows a data structure, for example a message 10. said message 10 comprises for example four data fields.

A first data field of said message 10 contains a piece of information. Said piece of information is for example a first certificate 11, e.g. multiple public server certificates or a public server certificate associated with a server.

Said piece of information may be any other type of information like e.g. a link to said server, said link comprising a randomly generated number.

A second data field of said message 10 contains a second certificate 12.

A third data field of said message 10 contains for example a first signature 15.

A fourth data field 16 of said message 10 comprises other certificates, e.g. of a chain of trust in a public key infrastructure.

Said message 10 may comprise the abovementioned information in any order, even fragmented or encrypted. Said message 10 may also contain more information like a header for addressing, e.g. according to the Internet Protocol (well known as IP).

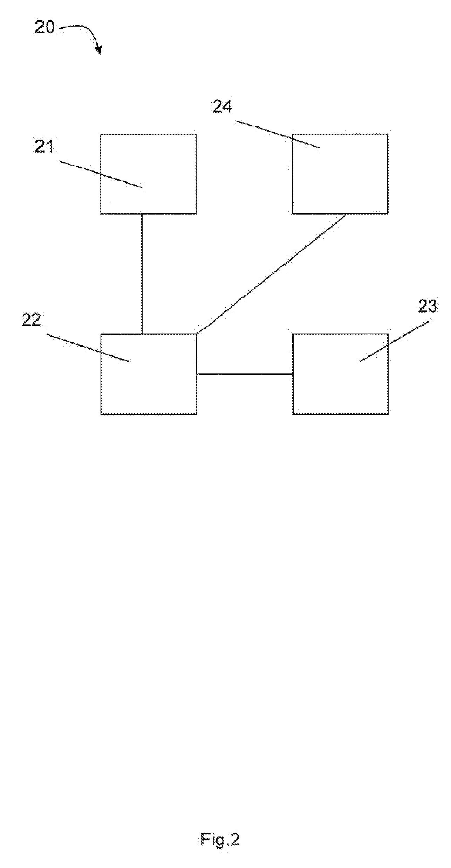

Fig. 2 schematically shows elements of a first user equipment 20.

Said first user equipment 20 comprises a receiver 21 for receiving said message 10. Said receiver 21 is for example an Ethernet interface according to the well known IEEE 802.3 Ethernet-Standard.

Said receiver 21 may be any type of receiver, for example a Wireless LAN receiver according to the well known IEEE 802.11 standard as well.

Additionally, said first user equipment 20 comprises a first processor 22, a first storage 23 and a second storage 24.

Said first processor 22 is connected to said receiver 21, said first storage 23 and said second storage 24 via for example a data bus.

Said first storage 23 is adapted to store a third certificate. Said first storage 23 is protected against manipulation.

Said first storage 23 is for example a flash-memory that is flashed with said third certificate in a factory for manufacturing said first user equipment 20.

Manipulation of said first storage 23 is for example prevented using a protected hardware. Manipulation protection methods well known to people skilled in the art, such as encryption of the content of said first storage 23 or structural modifications to the hardware may be used as well.

Encryption and decryption may be performed by said first processor 22 or a dedicated encryption/decryption chip using any encryption algorithm, like the well Known AES, Serpent or Twofish algorithm.

Structural modifications to the hardware may include not connecking programming pins of said first storage 23 to a printed circuit board or making non-destructive access to programming pins of said first storage 23 impossible.

Said second storage 24 is adapted to store said first certificate 11.

Said second storage 24 is for example a non-volatile memory like a flash memory.

Said first user equipment 20 may contain more elements like a sender or a user interface as well.

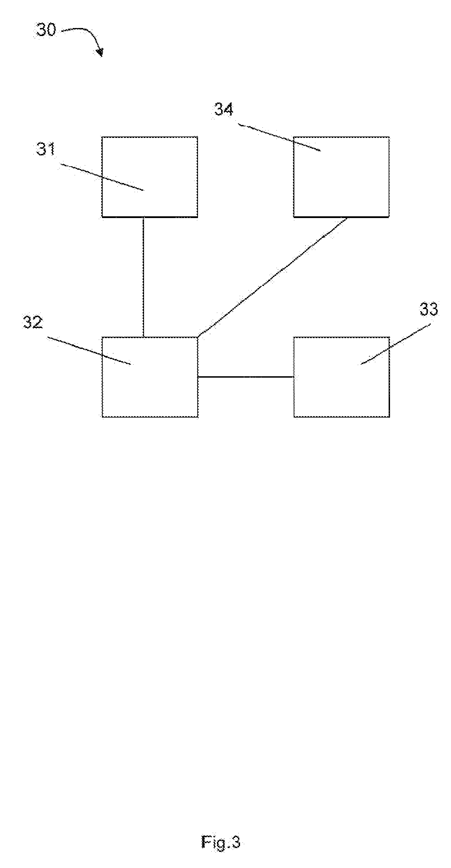

Fig. 3 schematically shows a second user equipment 30.

Said second user equipment 30 comprises a third storage 31, e.g. a flash-memory. Said third storage 31 is protected against manipulation, e.g. in the same way as said first storage 23.

A private key and a fourth certificate are stored in said third storage 31 e.g. during an initialisation process in said factory.

Said second user equipment 30 comprises a second processor 32 adapted to determine said message 10.

Said second user equipment 30 additionally comprises a sender 33 for sending said message 10. Said sender 33 is for example an Ethernet interface according to the well known IEEE 802.3 Ethernet-Standard.

Said sender 33 may be any type of sender, for example a Wireless LAN receiver according to the well known IEEE 802.11 standard as well.

Said second user equipment 30 comprises a receiver 34 for receiving said first certificate 11. Said receiver 34 is for example an Ethernet interface according to the well known IEEE 802.3 Ethernet-Standard.

Said receiver 34 may be any type of receiver, for example a Wireless LAN receiver according to the well known IEEE 802.11 standard as well.

Said second user equipment 30 may additionally contain other elements like a user interface.

Said second processor 32 its connected to said sender 33, said receiver 34 and said third storage 31, tor example via a data bus.

The abovementioned certificates comprise public keys and additional information about an assignee, i.e. owner associated with this certificate, and an issuer of said certificates.

Such certificates, signatures as well as private keys and public keys are well known by a person skilled the art, for example from the ITU-T Recommendation X.509 (08/05).

Said third certificate is a first public root certificate issued by a first certificate authority and assigned to said first, certificate authority. Said first certificate authority is for example a root certificate authority.

Said first public root certificate contains a first public root key. Said first public root key and a first private root key form a first pair of root keys.

Said first private root key is used to sign all certificates that are issued, by said first certificate authority with a first root signature.

Said first root signature, is part of each certificate issued by said first certificate authority. All certificates issued by said first certificate authority can therefore be validated by authenticating said first root signature using said first public root key.

Said private key is part of a key pair of a cryptosystem comprising said private key and a matching public key,

Said key pair is issued by a second certificate authority and assigned to said second user equipment 30. Said public key is part of said fourth certificate.

Said fourth certificate is a public certificate issued and signed by said second certificate, authority and assigned to said second user equipment. 30.

Said second certificate 12 is an identical copy of said fourth certificate.

Said second processor 32 is adapted to determine said second certificate 12 as an identical copy of said fourth certificate.

Said second certificate authority is linked to said first certificate authority via said chain of trust in said public key infrastructure.

Said chain of trust in said public key infrastructure comprises for example of said first certificate authority, said second certificate authority and said second user equipment. Links of said chain of trust are represented by said first root certificate, said second root certificate and said fourth certificate respectively.

A first link of said chain of trust in this example is the first root certificate, Said first link is considered an anchor of said chain of trust.

A second link of said chain of trust in this example is said second root certificate. Said second root certificate is issued and signed by said first certificate authority, using said first private root key. Therefore said second root certificate can be validated to be issued by said first certificate authority using said first root certificate.

A third link of said chain of trust in this example is said fourth certificate. Said fourth certificate is issued and signed by said second certificate authority, using a second private root key of said second certificate authority. Therefore said fourth certificate can be validated to be linked to said second root certificate using a second public root key comprised in said second root certificate of said second certificate authority.

Furthermore said fourth certificate may be validated to be linked to said first root certificate via said second root certificate, by sequentially validating said fourth certificate using said second root certificate and validating said second root certificate using said first root certificate.

This means that someone trusting said first certificate authority can authenticate said fourth certificate even if it was not issued by said first certificate authority directly.

Said chain of trust may comprise of any number of certificates between the fourth certificate and the first root certificate.

All certificates of said chain cf trust are stored, in said third storage 31 during said initialization in said factory.

Public key infrastructures and chains of trust are well known to a person skilled in the art, e.g. from ITU-T Recommendation X.509 (08/05).

Said processor 32 is adapted to determine said first signature 15 with said private key and said piece of information for example using an asynchronous cryptosystem to create said first signature 15.

Asynchronous cryptosystems using for example the well known Rivest, Shamir and Adleman (RSA) public-key cryptography algorithm are well known to a person skilled in the art.

Other cryptography algorithms may be used as well, e.g. the well known Elgamal crypto algorithm.

Said second processor 32 is adapted to determine said fourth data field 16 of said message 10. In this case all subsequent certificates, of said chain of trust are read by said processor 32. Said fourth data field 16 of said message 10 is determined by said second processor 32 using said subsequent certificates of said chain of trust.

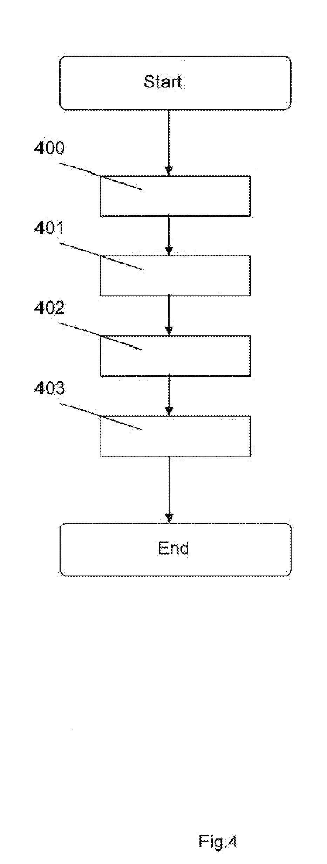

A first method for creating said message 10 is described making reference to said first flowchart depicted in Fig. 4.

Said third storage 31 may additionally contain instructions, e.g. a computer program, that when executed on said second processor 32 implements said first, method according to the invention.

Said first method starts whenever said piece of information, e.g. said first certificate 11, is received in said message 10 by said second user equipment 30. Said piece of information is for example received from a laptop that is operated by an administrator of said second user equipment 30 and connected to said second user equipment 30 via an Ethernet cable. Said piece of information may be provided from a storage via an universal serial bus interface (well known as USB interface) as well.

After the start, a step 400 is executed.

In said step 400, said private key and said fourth certificate are read from said third storage 31. Afterwards a step 401 is executed.

In said step 401, said first signature 15 is determined by calculating the digital signature of said piece of information, e.g. said first certificate 11 using said private key and said cryptographic algorithm. Afterwards, a step 402 is executed.

In said step 402, said message 10 is determined, e.g. by copying said fourth certificate as said second certificate 12 into said second data field and joining it with said piece of information in said first data field and said first signature 15 in said third data field. This way the structure described in Fig. 1 is created,

All certificates within said chain of trust are joined to said message 10 in said fourth data field 16, as well. Afterwards, a step 403 is executed.

In step 403, said message 10 is sent, e.g. to said server using an internet protocol address of said server. Said internet protocol address of said server is for example stored on said second user equipment 30. Afterwards, said first method ends.

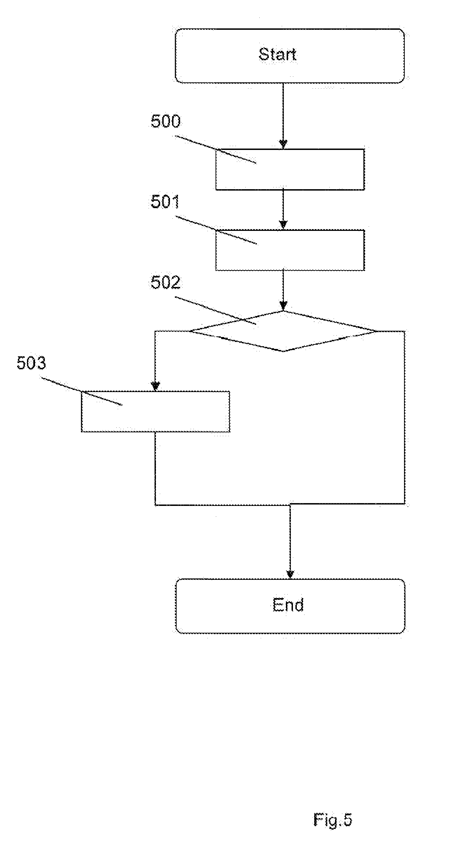

A second method for storing said piece of information, in particular said first certificate 11, on said first user equipment 20 is described making reference to said second flowchart depicted in Fig. 5.

Said first storage 23 may additionally contain instructions, e.g. a computer program, that when executed on said first processor 22 implements said second method according to the invention.

Said second method starts for example when said message 10 containing said piece of information, e.g. said first certificate 11 is received by said first user equipment 20. Said message 10 is tor example pushed to all user equipments known by said server via an Ethernet link to said devices,

Afterwards, a step 500 is executed.

In step 500, said second certificate 12 is verified using said third certificate read from said first storage 22.

Afterwards, a step 501 is executed.

In step 501, said first signature 15, is verified using said second certificate 12. This means that said first signature 15 is either authenticated successfully as authentic signature of said second user equipment 30, or said authentication fails.

To create said second certificate 12, all certificates within said chain of trust may be checked sequentially. This way, even if said fourth certificate, and therefore said second certificate 12, was not created by said first certificate authority directly, but by said second certificate authority, the signature can be verified. Afterwards, a step 502 is executed.

In said step 502, a test is performed to check if all verifications performed in the steps 500 and 501 were successful. In case all verifications were successful, a step 503 is executed. Otherwise, the piece of information, e.g. the first certificate 11, is not stored and the method ends.

In said step 503 said piece of information, e.g. said first certificate 11, is stored in said second storage 24. Afterwards, the second method ends.

Methods for the verification of the abovementioned certificates and the first signature 15 are well known to a person skilled in the art, for example from said ITU-T Recommendation X.509 (08/05) and not explained here further.

Alternatively or additionally a device certificate of said first user equipment 20 may be linked to said first root certificate by another chain of trust.

Alternatively or additionally said fourth certificate may be issued by said first certificate authority directly.

This means that said first signature 15 and a device certificate of said first user equipment 20 are linked by at least one chain of trust, in particular to a common root certificate, in particular being issued by a common root certificate authority.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts and the like represent various processes which may be substantially represented in computer readable medium and so executed by a computer or processor, whether or not such computer or processor is explicitly shown,

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of in structions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for storing a piece of information, in particular a first certificate (11), **wherein** storing (503) of said piece of information on a first user equipment (20) is permitted (502) if a first signature (15), in particular a digital signature produced depending on said piece of information, is successfully validated (500, 501) as authentic signature of a second user equipment (30), or storing of said piece of information is prevented (502) otherwise.

2. The method according to claim 1, comprising the steps of
- receiving a message (10) comprising said piece information, said first signature (15) and a second certificate (12),
- reading a third certificate at least partially from a first storage (23), and
- validating said first signature (15) depending on said second certificate (12) and said third certificate.

3. The method according to claim 1, wherein said first signature (15) is associated with a second certificate (12) and wherein said first, signature (15) is validated using said, second certificate (12).

4. The method according to claim 1, wherein said first signature (15) and a device certificate of said first user equipment (20) are linked by at least one chain of trust, in particular to a common root certificate, in particular being issued by a common root certificate authority.

5. A first user equipment (20) for storing (503) a piece of information, in particular a first certificate (11), **wherein**
- a first receiver (21) is adapted to receive a message (10) comprising said piece of information and a first signature (15), in particular a digital signature produced depending on said piece of information,
- a first processor (22) is adapted to permit (502) storing (503) of said piece of information, in particular in a second storage (24), if said first signature (15) is successfully validated (500, 501) as an authentic signature of a second user equipment (30), or prevent (502) storing of said piece of information otherwise.

6. The first user equipment (20) according to claim 5,
wherein said message (10) comprises a second certificate (12), and wherein
- said first processor (22) is adapted to authenticate said first signature (15) using said second certificate (12), and
- said first processor (22) is adapted to authenticate said second certificate (12) using a third certificates.

7. A second user equipment (30) for determining a Message (10), **wherein**
- a second receiver (34) is adapted to receive a piece of information, in particular a first certificate (11),
- a third storage (31) is adapted to store a fourth certificate (14) and a private key associated with said second user equipment (30),
- a second processor (32) is adapted to determine a first signature (15) depending on said piece of information and said private key,
- said second processor (32) is adapted to determine said message (10) depending on said piece of information, said first signature (15) and said fourth certificate (14), and
- a sender (33) is adapted to sending said message (10).

8. A computer program for storing a piece of information, in particular a first certificate (11), **wherein** said computer program, when executed on a computer, causes the computer to permit (502) storing (503) of said piece of information on a first user equipment (20) if a first signature (15), in particular a digital signature produced depending on said piece of information, is successfully validated (500, 501) as authentic signature of a second user equipment (30), or to prevent (502) storing of said piece of information otherwise.

9. A computer program product for storing a piece of information, in particular a first certificate (11) comprising a computer usable medium having a computer readable program, **wherein** said computer readable program, when executed on a computer, causes the computer to permit (502) storing (503) of said piece of information on a first user equipment (20) if a first signature (15), in particular a digital signature produced depending on said piece of information, is successfully validated (500, 501) as authentic signature of a second user equipment (30), or to prevent (502) storing of said piece of information otherwise,

## Amended claims

### Amended claims in accordance with Rule 137(2) EPC.

**1.** A method for storing a piece of information, wherein storing (503) of said piece of information on a first user equipment (20) is permitted (502) if a first signature (15) is successfully validated (500, 501) as authentic signature of a second user equipment (30) and storing of said piece of information is prevented (502) otherwise **characterized in that** said first signature (15) and a device certificate of said first user equipment (20) are linked by at least one chain of trust.

**2.** The method according to claim 1, comprising the steps of
- receiving a message (10) comprising said piece information, said first signature (15) and a second certificate (12),
- reading a third certificate at least partially from a first storage (23), and
- validating said first signature (15) depending on said second certificate (12) and said third certificate.

**3.** The method according to claim 1, wherein said first signature (15) is associated with a second certificate (12) and wherein said first signature (15) is validated using said second certificate (12).

**4.** A first user equipment (20) for storing (503) a piece of information (11), wherein
- a first receiver (21) is adapted to receive a message (10) comprising said piece of information and a first signature (15),
- a first processor (22) is adapted to permit (502) storing (503) of said piece of information if said first signature (15) is successfully validated (500, 501) as an authentic signature of a second user equipment (30) and prevent (502) storing of said piece of information otherwise, **characterized in that** said first signature (15) and a device certificate of said first user equipment (20) are linked by at least one chain of trust.

**5.** The first user equipment (20) according to claim 4, wherein said message (10) comprises a second certificate (12), and wherein
- said first processor (22) is adapted to authenticate said first signature (15) using said second certificate (12), and
- said first processor (22) is adapted to authenticate said second certificate (12) using a third certificate.

**6.** A second user equipment (30) for determining a message (10), wherein
- a second receiver (34) is adapted to receive a piece of information,
- a third storage (31) is adapted to store a fourth certificate (14) and a private key associated with said second user equipment (30),
- a second processor (32) is adapted to determine a first signature (15) depending on said piece of information and said private key,
- said second processor (32) is adapted to determine said message (10) depending on said piece of information, said first signature (15) and said fourth certificate (14), and
- a sender (33) is adapted to sending said message (10), **characterized in that** said first signature (15) and a device certificate of said first user equipment (20) are linked by at least one chain of trust.

**7.** A computer program for storing a piece of information wherein said computer program, when executed on a computer, causes the computer to permit (502) storing (503) of said piece of information on a first user equipment (20) if a first signature (15) is successfully validated (500, 501) as authentic signature of a second user equipment (30) and to prevent (502) storing of said piece of information otherwise, **characterized in that** said first signature (15) and a device certificate of said first user equipment (20) are linked by at least one chain of trust.

**8.** A computer program product for storing a piece of information comprising a computer usable medium having a computer readable program, wherein said computer readable program, when executed on a computer, causes the computer to permit (502) storing (503) of said piece of information on a first user equipment (20) if a first signature (15) is successfully validated (500, 501) as authentic signature of a second user equipment (30) and to prevent (502) storing of said piece of information otherwise, **characterized in that** said first signature (15) and a device certificate of said first user equipment (20) are linked by at least one chain of trust.
